# EUROPÄISCHE PATENTSCHRIFT

(11) **EP 0 678 961 B1**
(45) Veröffentlichungstag und Bekanntmachung des Hinweises auf die Patenterteilung: **23.12.1998**
(21) Anmeldenummer: 95890075.5
(22) Anmeldetag: 06.04.1995
(51) Int. Cl.: H02H 3/04, H02H 9/04

(54) **Schaltung zum Erkennen und Anzeigen einer Unterbrechung einer Leitung**
Conductor interruption identifying and indicating circuit
Circuit reconnaissant et affichant l'interruption d'un conducteur

(30) Priorität: 21.04.1994 AT 833/94
(43) Veröffentlichungstag der Anmeldung: 25.10.1995
(73) Patentinhaber: FELTEN & GUILLEAUME AUSTRIA AG, 3943 Schrems-Eugenia 1 (AT)
(72) Erfinder: Racek, Wolfgang, Dr., A-1180 Wien (AT); Suchentrunk, Karl, Ing., A-2435 Wienerherberg (AT)
(74) Vertreter: Hehenberger, Reinhard, Dipl.-Ing.

(56) Entgegenhaltungen:
- DE-A- 3 423 444
- DE-U- 8 914 933
- US-A- 4 271 446
- US-A- 4 912 590

## Beschreibung

Die Erfindung betrifft eine Schaltung zum Erkennen und Anzeigen einer Unterbrechung einer Verbindungsleitung zwischen zwei Polen, wobei in der Verbindungsleitung ein Zweipol vorgesehen ist, wobei parallel zum Zweipol zwei erste Impedanzen einer Brückenschaltung vorgesehen sind, wobei parallel zur Verbindungsleitung zwei zweite Impedanzen der Brückenschaltung vorgesehen sind, welche die beiden Pole miteinander verbinden, und wobei in der Brücke zwischen den beiden ersten und zweiten Impedanzen der Brückenschaltung eine Signaleinrichtung angeordnet ist, die bei einer Unterbrechung der Verbindungsleitung ein Signal abgibt.

Im Rahmen dieser Erfindung können die Pole auch Nulleiter und/oder Phasen sein.

Es sind Signaleinrichtungen zum Erkennen und Anzeigen einer Unterbrechung einer Leitung zu und von einem Verbraucher bekannt, die parallel zum Verbraucher geschaltet sind. Die Signaleinrichtung, die beispielsweise eine Glühlampe sein kann, leuchtet, wenn sie an Spannung liegt und erlischt, wenn in einer oder beiden Leitungen zum und vom Verbraucher eine Unterbrechung, z.B. durch Öffnen einer Sicherung, eintritt. Im Fehlerfall oder auch bei Netzausfall gibt die Signaleinrichtung kein Signal ab. Dadurch ist der Fehler nicht sofort eindeutig erkennbar. Da die Signaleinrichtung im Fehlerfall nicht aktiv ist, weist sie eine umgekehrte Logik auf, die nicht immer erwünscht ist, vor allem bei akustischen Signaleinrichtungen.

Bekannt ist es weiters, parallel zu einer zu überwachenden Leitung zwischen zwei Phasen zu einem Dipol eine Signaleinrichtung anzuordnen, die jedoch kurzgeschlossen ist, solange die Leitung von einer Phase zum Zweipol intakt ist. Wird die Leitung unterbrochen, wird die Signaleinrichtung aktiv und gibt ein Signal ab. Ein Nachteil bei dieser Schaltung ist, daß nur eine Leitung von einer Phase zum Zweipol überwacht wird. Die zweite Leitung von der zweiten Phase zum Zweipol wird nicht überwacht.

Aus der DE-A 34 23 444 ist eine gattungsgemäße Schaltung bekannt, mit der es möglich ist, eine Unterbrechung der Verbindungsleitung zu beiden Seiten des Zweipoles zu erkennen und mit einer einzigen Signaleinrichtung zuverlässig anzuzeigen, die ein Signal abgibt, wenn die Verbindungsleitung unterbrochen wird. Die in der DE-A 34 23 444 beschriebene Schaltung gibt jedoch nur dann ein Signal ab, wenn nur eine der beiden Leitungen zum Zweipol unterbrochen ist. Wenn beide unterbrochen sind, gibt sie kein Signal ab.

Der Erfindung liegt die Aufgabe zugrunde, eine Schaltung der eingangs genannten Gattung anzugeben, welche die Nachteile des Standes der Technik nicht aufweist.

Gelöst wird diese Aufgage bei einer gattungsgemäßen Schaltung dadurch, daß eine weitere Impedanz parallel zur Reihenschaltung einer ersten Impedanz, der Brücke und einer zweiten Impedanz geschaltet ist.

Die Schaltung gemäß der Erfindung zeigt sowohl eine Unterbrechung der Verbindungleitung zu beiden Seiten des Zweipols an als auch eine Unterbrechung der Verbindungsleitung vom Zweipol zum Nulleiter, so daß die erfindungsgemäße Schaltung auch im Einphasennetz und vor allem bei der Verwendung von Schukosteckdosen zum Einsatz kommen kann.

Die in der DE-A 34 23 444 beschriebene Schaltung signalisiert nur eine Unterbrechung einer der beiden Leitungen zum Zweipol. Damit die Signaleinrichtung jedoch auch anzeigt, wenn beide Leitungen unterbrochen sind, ist gemäß der Erfindung vorgesehen, daß eine weitere Impedanz parallel zu einer ersten Impedanz, der Brücke und einer zweiten Impedanz geschaltet ist. Die Schaltung hat daher den Vorteil, daß an der Brücke auch dann eine Spannung anliegt, wenn beide Leitungen unterbrochen sind.

Die erfindungsgemäße Schaltung kann zur Überwachung von Leitungsunterbrechungen ganz allgemeiner Art zum Einsatz kommen. Bevorzugt wird sie jedoch zur Überwachung eingesetzt, ob in der Verbindungsleitung angeordnete Sicherungen angesprochen haben oder nicht. Gemäß einer Weiterbildung der Erfindung kann daher vorgesehen sein, daß vor und nach dem Zweipol eine Sicherung vorgesehen ist und daß die ersten Impedanzen der Brückenschaltung zwischen den Sicherungen an die Verbindungsleitung angeschlossen sind.

Die erfindungsgemäße Schaltung kann zur Überwachung von Sicherungen eingesetzt werden, die in elektrischen Leitungen zum Schutz von Verbrauchern verwendet werden, wobei bei einem Ausfall des Verbrauchers sofort festgestellt werden kann, ob eine Sicherung angesprochen hat, oder ob ein anderer Defekt vorliegt.

Gemäß einer vorteilhaften Weiterbildung der Erfindung kann vorgesehen sein, daß der Zweipol ein Varistor ist.

Zum Überspannungsschutz in einphasigen Systemen werden unter anderem auch Varistoren eingesetzt. Wenn die durch die Varistoren abgeleitete Energie ein Höchstmaß überschreitet, können die Varistoren thermisch zerstört werden, wodurch der Varistor besser leitend wird. Dies hat zur Folge, daß der Varistor thermisch noch mehr belastet wird und der elektrische Widerstand des Varistors noch stärker abnimmt. Durch diesen Lawineneffekt wird der aus dem Netz gespeiste Strom über den Varistor immer weiter ansteigen, bis die elektrischen Zuleitungen überlastet sind, oder die Abwärme des Varistors einen Brand verursacht.

Um dies zu verhindern, werden den Varistoren Sicherungen vorgeschaltet. Wenn die Sicherungen im Fehlerfall angesprochen haben, ist jedoch der Überspannungsschutz für weitere Überspannungen außer Funktion. Um diesen Zustand erkennen und beheben zu können, bedient man sich der erfindungsgemäßen Schaltung, welche sofort anzeigt, daß der Überspannungsschutz außer Funktion ist.

In einer Weiterbildung der Erfindung kann vorgesehen sein, daß der Zweipol aus zwei in Serie geschalteten Varistoren besteht und daß die Leitung zwischen den beiden Varistoren über eine Spannungsbegrenzungseinrichtung geerdet ist, wobei vorteilhafterweise vorgesehen sein kann, daß die Spannungsbegrenzungseinrichtung eine Funkenstrecke, eine Zenerdiode oder ein Varistor ist.

Diese Ausführungsformen bieten den Vorteil, daß eine Spannungsbegrenzung auf einen genau vordefinierten Wert möglich ist.

Gemäß einer weiteren bevorzugten Ausführungsform der Erfindung kann vorgesehen sein, daß anstelle einer die Pole miteinander verbindenden zweiten Impedanz der Brückenschaltung eine Signaleinrichtung vorgesehen ist. Diese Signaleinrichtung, die bei geeigneter Dimensionierung eine der zweiten Impedanzen der Brückenschaltung ersetzen kann, zeigt an, ob überhaupt eine Netzspannung vorhanden ist.

Es ist vorteilhaft, wenn bei der erfindungsgemäßen Schaltung angezeigt wird, welche Leitung unterbrochen ist bzw. welche Sicherung geöffnet hat.

Die Erfindung kann daher dadurch weitergebildet sein, daß die parallel zur Sicherung vorgesehene Impedanz eine Signaleinrichtung ist. Auf diese Weise kann sehr einfach angezeigt werden, daß wenigstens die Sicherung, zu der letztere Signaleinrichtung parallel geschaltet ist, angesprochen hat. Zusätzlich oder alternativ kann vorgesehen sein, daß eine oder beide der ersten Impedanzen der Brückenschaltung Signaleinrichtungen sind.

Die Signaleinrichtungen, die bei der erfindungsgemäßen Schaltung zum Einsatz kommen können, können entweder optische oder akustische Signaleinrichtungen sein.

Weitere Merkmale und Vorteile der Erfindung ergeben sich aus den Unteransprüchen und der nachfolgenden Beschreibung von Ausführungsformen der Erfindung unter Bezugnahme auf die Zeichnungen.

Es zeigt:
Fig. 1 eine im Stand der Technik bekannte Schaltung,
Fig. 2 eine Schaltung gemäß der Erfindung, bei der eine Unterbrechung einer oder beider Leitungen zum Zweipol von einer Signaleinrichtung angezeigt werden kann,
Fig. 3 eine erfindungsgemäße Schaltung, bei der in den Leitungen zum Zweipol Sicherungen angeordnet sind, die überwacht werden, und
Fig. 4 eine erfindungsgemäße Schaltung, bei der zusätzlich durch eine Signaleinrichtung angezeigt wird, ob eine Netzspannung vorhanden ist oder nicht.

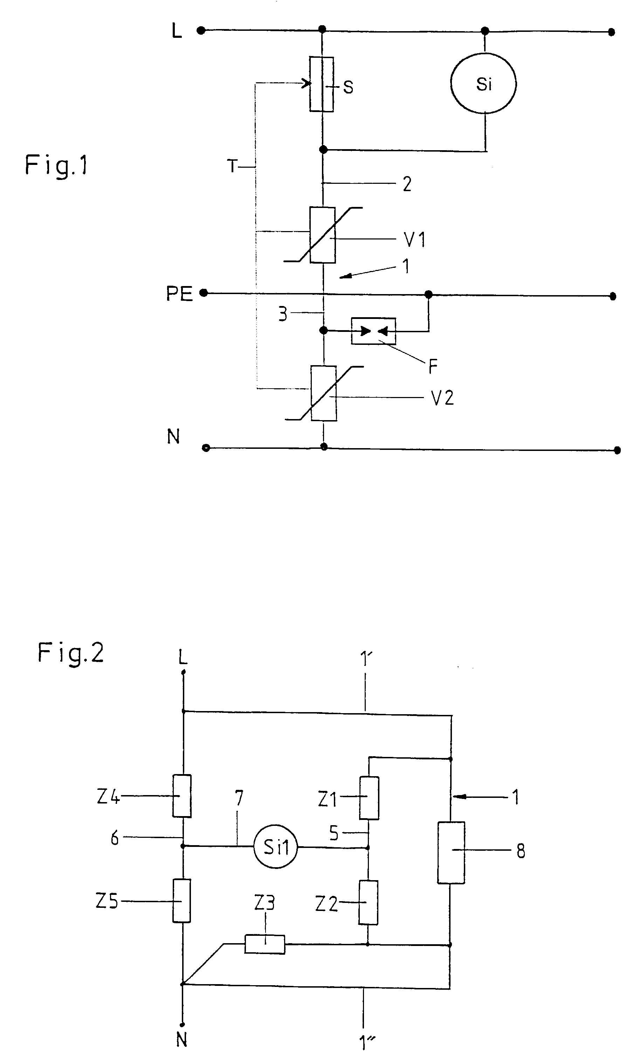

Bei der in Fig. 1 dargestellten, aus dem Stand der Technik bekannten Schaltung zum Schutz vor Überspannungen in einphasigen Systemen sind zwei in Serie geschaltete Varistoren V1 und V2 in einer Verbindungsleitung 1 zwischen der Phase L und dem Nulleiter N vorgesehen. An die Leitung 3 zwischen den Varistoren V1 und V2 ist eine Funkenstrecke F angeschlossen, die über die Leitung PE geerdet ist. Durch diese Schaltung ist ein gewisser Schutz vor Überspannungen im einphasigen System gegeben.

Zum Schutz der Varistoren V1 und V2 vor thermischer Überlastung, die eintreten kann, wenn die durch die Varistoren abgeleitete Energie ein Höchstausmaß überschreitet, ist in der Leitung 2 zwischen dem Varistor V1 und der Phase L eine Sicherung S vorgesehen, die im Überlastfall öffnet. Parallel zur Sicherung S ist eine Signaleinrichtung Si geschaltet, die beim Öffnen der Sicherung S ein optisches oder akustisches Signal abgibt.

Im Einphasennetz, vor allem bei der Verwendung von Schukosteckdosen, kann die Plazierung von L und N nicht festgelegt werden. Wenn die Phase L an die N-Klemme angeschlossen wird, ist die Strecke N nicht gegen PE geschützt. Dies kann bei Zündung der Funkenstrecke durch eine Überspannung mit anschließender Überlastung des Varistors V2 zu einer Überlastung der elektrischen Zuleitung oder zur Überhitzung des Varistors mit Brandgefahr führen.

In Fig. 2 ist ein allgemeines Schaltbild der erfindungsgemäßen Schaltung zum Erkennen und Anzeigen einer Unterbrechung einer Verbindungsleitung 1 zwischen zwei Polen L, N dargestellt, wobei in der Verbindungsleitung 1 ein Zweipol 8 angeordnet ist. Parallel zum Zweipol 8 sind zwei erste Impedanzen Z1, Z2 in einer Leitung 5 in Serie geschaltet. Parallel zur Leitung 1 bzw. zum Zweipol 8 sind weiters zwei weitere Impedanzen Z4 und Z5 in einer Leitung 6 vorgesehen. In einer Brücke 7 zwischen den Leitungen 5 und 6 einer so gebildeten Brückenschaltung ist eine Signaleinrichtung Si1 vorgesehen.

Wenn der Dimensionierung der Impedanzen Z1, Z2, Z4 und Z5 die Formel Z1/Z2 = Z4/Z5 zugrunde gelegt wird, befindet sich die Brücke im normalen Betriebszustand im Gleichgewicht, d.h., daß an der Leitung 7 keine Spannung anliegt und die Signaleinrichtung Si1 inaktiv ist. Wird eine der Leitungen 1', 1'' von den Polen L, N zum Zweipol 8 unterbrochen, wird das Brückengleichgewicht gestört und die Signaleinrichtung Si1 gibt ein optisches oder akustisches Warnsignal ab.

Damit die Signaleinrichtung Si1 auch dann aktiv wird, wenn beide Leitungen 1', 1'' unterbrochen sind, ist parallel zur Brücke 7 eine weitere Impedanz Z3 vorgesehen. Somit liegt auch dann an der Brücke 7 eine Spannung an, wenn 1' und 1'' geöffnet sind, so daß die Signaleinrichtung Sil aktiv ist.

Die Impedanz Z3 muß dabei so dimensioniert sein, daß bei intakten Leitungen 1' und 1'' das Brückengleichgewicht nicht so weit gestört wird, daß die Signaleinrichtung Sil aktiv ist, daß jedoch bei unterbrochener Leitung 1' und/oder 1'' der Spannungsabfall an der Brücke 7 ausreichend hoch ist, daß die Signaleinrichtung Si1 aktiv wird.

Als Impedanzen Z1 bis Z5 können vorzugsweise Ohm'sche Widerstände, jedoch auch Kondensatoren, Induktivitäten oder andere geeignete Elemente eingesetzt werden.

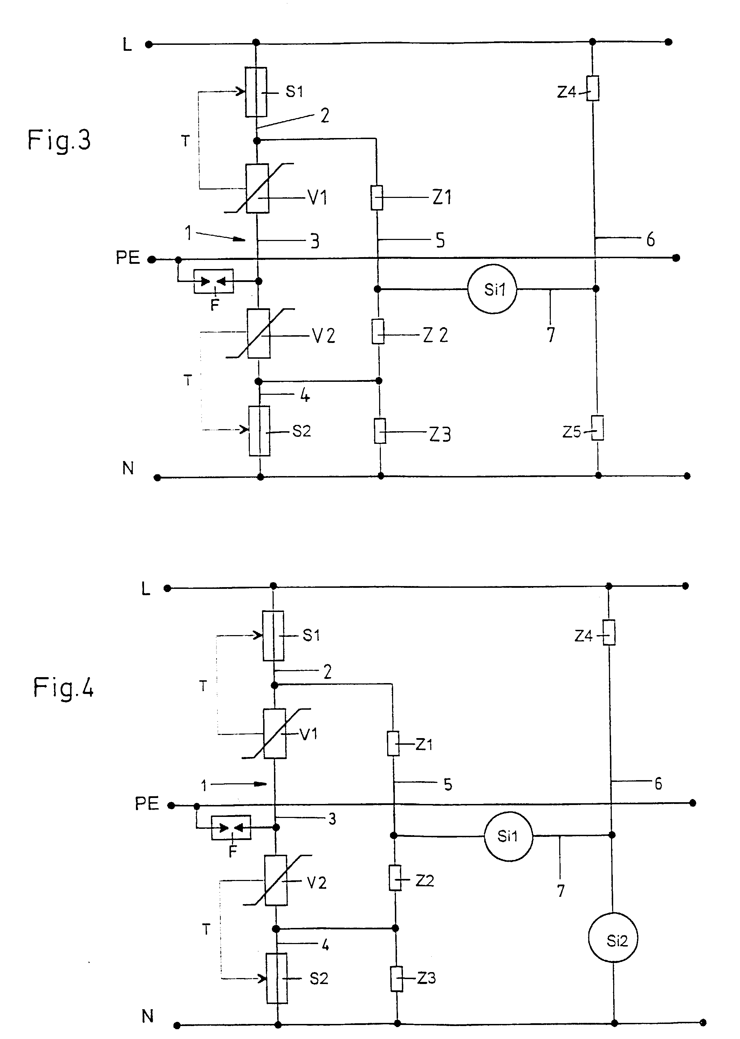

Eine weiterentwickelte Ausführungsform der erfindungsgemäßen Schaltung ist in Fig. 3 dargestellt. Die Phase L und der Nulleiter N sind wiederum mittels einer Verbindungsleitung 1 miteinander verbunden, in der zwei Varistoren V1 und V2 in Serie geschaltet sind. An die Leitung 3 zwischen den Varistoren V1 und V2 ist eine Funkenstrecke F angeschlossen, die über PE geerdet ist. Im Teilstück 2 der Verbindungsleitung 1 zwischen dem Varistor V1 und der Phase L ist eine Sicherung S1 angeordnet und im Teilstück 4 der Verbindungsleitung 1 zwischen dem Varistor V2 und dem Nulleiter N ist eine Sicherung S2 angeordnet. Die Sicherungen S1 und S2 können z.B. Schmelzsicherungen, Thermosicherungen, Bimetallsicherungen oder PTC-Widerstände, die die Temperatur der Varistoren V1 und V2 erfassen, sein und schützen die gesamte Schaltung und insbesondere die Varistoren V1 und V2 sowie die Funkenstrecke F vor Überlastungen.

Parallel zu den Varistoren V1 und V2 sind die zwei ersten Impedanzen Z1 und Z2 in einer Leitung 5 in Serie geschaltet und zwischen dem Varistor V1 und der Sicherung S1 bzw. dem Varistor V2 und der Sicherung S2 an die Verbindungsleitung 1 angeschlossen. Die zwei weiteren Impedanzen Z4 und Z5 sind in der Leitung 6 vorgesehen, welche die Phase L und den Nulleiter N direkt miteinander verbindet. In der Brücke 7 zwischen den Leitungen 5 und 6 einer so gebildeten Brückenschaltung ist die Signaleinrichtung Si1 vorgesehen.

Bei der erfindungsgemäßen Schaltung gemäß Fig. 3 sind die Varistoren V1 und V2 durch die Sicherungen S1 und S2 in jedem Fall geschützt, egal ob die Phase nun an die L- oder N-Klemme angeschlossen ist.

Wenn der Dimensionierung der Impedanzen Z1, Z2, Z4 und Z5 wiederum die Formel Z1/Z2 = Z4/Z5 zugrundegelegt wird, befindet sich die Brücke im normalen Betriebszustand im Gleichgewicht. D.h., daß an der Leitung 7 keine Spannung anliegt und die Signaleinrichtung Sil inaktiv ist. Öffnet im Überlastfall eine der Sicherungen S1 oder S2, wird das Brückengleichgewicht gestört und die Signaleinrichtung Sil gibt ein optisches oder akustisches Warnsignal ab.

Damit die Signaleinrichtung Sil auch dann aktiv wird, wenn beide Sicherungen S1 und S2 öffnen, ist parallel zur Sicherung S2 wieder die Impedanz Z3 vorgesehen, die bei geschlossener Sicherung S2 jedoch kurzgeschlossen und somit inaktiv ist.

Wenn jedoch die Sicherung S1 und/oder S2 öffnet, liegt die Brücke 7 an Spannung und die Signaleinrichtung Si1 ist aktiv.

In Fig. 4 ist eine Ausführungsform der Erfindung dargestellt, bei welcher die Impedanz Z5 in der Leitung 6 durch eine geeignet dimensionierte Signaleinrichtung Si2 ersetzt ist. Durch die Signaleinrichtung Si2 wird angezeigt, ob Netzspannung vorhanden ist oder nicht.

Es ist ersichtlich, daß durch die erfindungsgemäße Schaltung ein Überspannungsschutz mit einer thermischen Überwachung der den Überspannungsschutz bewirkenden Bauteile möglich ist, egal ob die Phase nun an die L oder N Klemme angeschlossen ist, wobei gleichzeitig eine positive Anzeige möglich ist, ob eine oder beide Sicherungen in der Leitung geöffnet haben oder nicht.

Um anzuzeigen, welche der beiden Sicherungen S1 und S2 oder auch beide Sicherungen S1 und S2 geöffnet haben, können die Impedanzen Z1 bis Z3 durch Signaleinrichtungen ersetzt werden.

In diesem Fall würde, wenn die Sicherung S1 öffnet, die Signaleinrichtungen Z1 und Z2 ansprechen, öffnet die Sicherung S2 oder S1 und S2 würden alle drei Signaleinrichtungen Z1, Z2 und Z3 ansprechen. Unter Ansprechen wird in diesem Zusammenhang ganz allgemein eine Veränderung des Zustandes der Signaleinrichtung verstanden.

Zusammenfassend kann die Erfindung beispielsweise wie folgt dargestellt werden:

Bei einer Schaltung zum Erkennen und Anzeigen einer Unterbrechung einer Verbindungsleitung 1 zwischen zwei Polen L und N sind in der Verbindungsleitung 1 zwei in Serie geschaltete Varistoren V1, V2 vorgesehen, wobei die Leitung 3 zwischen den beiden Varistoren V1, V2 über eine Funkenstrecke F geerdet (PE) ist. Zwischen den Varistoren V1, V2 und den Polen L, N sind Sicherungen S1, S2 vorgesehen, die eine thermische Überlastung der Varistoren V1, V2 verhindern. Parallel zu den Varistoren V1 und V2 sind zwei erste Impedanzen Z1, Z2 und parallel zur Verbindungsleitung 1 zwei zweite Impedanzen Z4, Z5 einer Brückenschaltung vorgesehen. In der Brücke 7 zwischen den beiden ersten Z1, Z2 und zweiten Z4, Z5 Impedanzen der Brückenschaltung ist eine Signaleinrichtung Si1 vorgesehen, die bei einer Unterbrechung der Verbindungsleitung 1 ein Signal abgibt. Parallel zur Sicherung S2 ist eine weitere Impedanz Z3 vorgesehen.

Die Signaleinrichtung Si1 gibt ein optisches oder akustisches Signal ab, wenn eine oder beide Sicherungen S1, S2 geöffnet sind.

## Patentansprüche

1. Schaltung zum Erkennen und Anzeigen einer Unterbrechung einer Verbindungsleitung (1; 1', 1'') zwischen zwei Polen (L, N)), wobei in der Verbindungsleitung (1; 1', 1'') ein Zweipol (V1, V2, F, 8) vorgesehen ist, wobei parallel zum Zweipol (V1, V2, F, 8) zwei erste Impedanzen (Z1, Z2) einer Brückenschaltung vorgesehen sind, wobei parallel zur Verbindungsleitung (1; 1', 1'') zwei zweite Impedanzen (Z4, Z5) der Brückenschaltung vorgesehen sind, welche die beiden Pole (L, N) miteinander verbinden, und wobei in der Brücke (7) zwischen den beiden ersten (Z1, Z2) und zweiten (Z4, Z5) Impedanzen der Brückenschaltung eine Signaleinrichtung (Si1) angeordnet ist, die bei einer Unterbrechung der Verbindungsleitung (1; 1', 1'') ein Signal abgibt, dadurch gekennzeichnet, daß eine weitere Impedanz (Z3) parallel zur Reihenschaltung einer ersten Impedanz (Z2), der Brücke (7) und einer zweiten Impedanz (Z5) geschaltet ist.

2. Schaltung nach Anspruch 1, dadurch gekennzeichnet, daß vor und nach dem Zweipol (V1, V2, F, 8) eine Sicherung (S1, S2) vorgesehen ist und daß die ersten Impedanzen (Z1, Z2) der Brückenschaltung zwischen den Sicherungen (S1, S2) an die Leitung (2, 4) angeschlossen sind.

3. Schaltung nach Anspruch 1 oder 2, dadurch gekennzeichnet, daß der Zweipol (V1, V2) ein Varistor ist.

4. Schaltung nach Anspruch 1 oder 2, dadurch gekennzeichnet, daß der Zweipol aus zwei in Serie geschalteten Varistoren (V1, V2) besteht und daß die Leitung (3) zwischen den beiden Varistoren (V1, V2) über eine Spannungsbegrenzungseinrichtung (F) geerdet (PE) ist.

5. Schaltung nach Anspruch 4, dadurch gekennzeichnet, daß die Spannungsbegrenzungseinrichtung (F) eine Funkenstrecke, eine Zenerdiode oder ein Varistor ist.

6. Schaltung nach einem der Ansprüche 2 bis 5, dadurch gekennzeichnet, daß die Sicherungen (S1, S2) Schmelzsicherungen, Thermosicherungen, Bimetallsicherungen, PTC-Widerstände od.dgl. sind.

7. Schaltung nach einem der Ansprüche 1 bis 6, dadurch gekennzeichnet, daß die Impedanzen (Z1, Z2, Z4, Z5) der Brückenschaltung und gegebenenfalls die parallel zu einer Sicherung vorgesehene Impedanz (Z3) Ohmsche Widerstände, Kondensatoren, Induktivitäten od.dgl. sind.

8. Schaltung nach einem der Ansprüche 1 bis 6, dadurch gekennzeichnet, daß anstelle einer die Pole (L, N) miteinander verbindenden zweiten Impedanz (Z5) der Brückenschaltung eine Signaleinrichtung (Si2) vorgesehen ist.

9. Schaltung nach einem der Ansprüche 1 bis 8, dadurch gekennzeichnet, daß die parallel zur Brücke (7) vorgesehene Impedanz (Z3) eine Signaleinrichtung ist.

10. Schaltung nach einem der Ansprüche 1 bis 9, dadurch gekennzeichnet, daß eine oder beide der ersten Impedanzen (Z1, Z2) der Brückenschaltung Signaleinrichtungen sind.

11. Schaltung nach einem der Ansprüche 1 bis 10, dadurch gekennzeichnet, daß die Signaleinrichtungen (Si1, Si2) optische oder akustische Signaleinrichtungen sind.

## Claims

1. A circuit for identifying and indicating an interruption of a connecting line (1; 1', 1") between two poles (L, N), wherein a two-terminal network (V1, V2, F, 8) is provided in the connecting line (1; 1', 1") and two first impedances (Z1, Z2) of a bridge circuit are provided in parallel with the two-terminal network (V1, V1, F, 8), two second impedances (Z4, Z5) of the bridge circuit are provided in parallel with the connecting line (1; 1', 1") and connect the two poles (L, N) together, and wherein a signal device (Si1) is arranged in the bridging connection (7) between the two first impedances (Z1, Z2) and second impedances (Z4, Z5) of the bridge circuit and emits a signal when there is an interruption of the connecting line (1; 1', 1"), characterized in that a further impedance (Z3) is connected in parallel with the series connection of a first impedance (Z2), the bridging connection (7) and a second impedance (Z5).

2. A circuit according to claim 1, characterized in that a cut-out (S1, S2) is provided before and after the two-terminal network (V1, V2, F, 8) and in that the first impedances (Z1, Z2) of the bridge circuit are connected to the line (2, 4) between the cut-outs (S1, S2).

3. A circuit according to claim 1 or 2, charactenzed in that the two-terminal network (V1, V2) is a varistor.

4. A circuit according to claim 1 or 2, characterized in that the two-terminal network consists of two varistors (V1, V2) connected in series and in that the line (3) between the two varistors (V1, V2) is earthed (PE) through a voltage limiting device (F).

5. A circuit according to claim 4, characterized in that the voltage limiting device (F) is a spark gap, a Zener diode or a varistor.

6. A circuit according to any of claims 2 to 5, characterized in that the cut-outs (S1, S2) are fusible fuses, thermo-fuses, bimetallic cut-outs, PTC resistors or the like.

7. A circuit according to any of claims 1 to 6, characterized in that the impedances (Z1, Z2, Z4, Z5) of the bridge circuit and optionally the impedance (Z3) provided in parallel with a cut-out are ohmic resistors, capacitors, inductors or the like.

8. A circuit according to any of claims 1 to 6, charactenzed in that a signal device (Si2) is provided instead of a second impedance (Z5) of the bridge circuit connecting the poles (L, N) together.

9. A circuit according to any of claims 1 to 8, characterized in that the impedance (Z3) provided in parallel with the bridging connection (7) is a signal device.

10. A circuit according to any of claims 1 to 9, characterized in that one or both of the first impedances (Z1, Z2) of the bridge circuit are signal devices.

11. A circuit according to any of claims 1 to 10, characterized in that the signal devices (Si1, Si2) are optical or acoustic signal devices.

## Revendications

1. Circuit pour détecter et afficher une interruption dans un conducteur de liaison (1, 1', 1") entre deux pôles (L, N), un dipôle (V1, V2, F, 8) étant prévu dans le conducteur de liaison (1, 1', 1"), deux premières impédances (Z1, Z2) d'un branchement en pont étant prévues en parallèle avec le dipôle (V1, V2, F, 8), deux deuxièmes impédances (Z4, Z5) du branchement en pont étant prévues en parallèle avec le conducteur de liaison (1, 1', 1"), lesquelles impédances relient l'un à l'autre les deux pôles (L, N), et un dispositif de signal (Si1) qui délivre un signal en cas d'interruption du conducteur de liaison (1, 1', 1") étant disposé dans le pont (7) entre les deux premières impédances (Z1, Z2) et les deux deuxièmes impédances (Z4, Z5) du branchement en pont, caractérisé par le fait qu'une impédance supplémentaire (Z3) est connectée en parallèle avec le branchement série d'une première impédance (Z2), du pont (7) et d'une deuxième impédance (Z5).

2. Circuit selon la revendication 1, caractérisé par le fait qu'il est prévu une protection (S1, S2) en amont et en aval du dipôle (V1, V2, F, 8) et que les premières impédances (Z1, Z2) du branchement en pont sont connectées entre les protections (S1, S2).

3. Circuit selon la revendication 1 ou 2, caractérisé par le fait que le dipôle (V1, V2) est un varistor.

4. Circuit selon la revendication 1 ou 2, caractérisé par le fait que le dipôle est formé de deux varistors (V1, V2) montés en série et que la ligne (3) entre les deux varistors (V1, V2) est mise à la terre (PE) par l'intermédiaire d'un dispositif limiteur de tension (F).

5. Circuit selon la revendication 4, caractérisé par le fait que le dispositif limiteur de tension (F) est un éclateur à étincelle, une diode Zener ou un varistor.

6. Circuit selon une des revendications 2 à 5, caractérisé par le fait que les protections (S1, S2) sont des protections à fusible, des protections thermiques, des protections à bilames, des résistances CTP ou similaires.

7. Circuit selon une des revendications 1 à 6, caractérisé par le fait que les impédances (Z1, Z2, Z4, Z5) du branchement en pont et le cas échéant l'impédance (Z3) prévue en parallèle avec une protection sont des résistances ohmniques, des condensateurs, des inductances ou similaires.

8. Circuit selon une des revendications 1 à 6, caractérisé par le fait qu'il est prévu un dispositif de signal (Si2) à la place d'une impédance (Z5) reliant l'un à l'autre les pôles (L, N) du branchement en pont.

9. Circuit selon une des revendications 1 à 8, caractérisé par le fait que l'impédance (Z3) prévue en parallèle avec le branchement en pont (7) est un dispositif de signal.

10. Circuit selon une des revendications 1 à 9, caractérisé par le fait qu'une ou les deux premières impédances (Z1, Z2) du branchement en pont (7) sont des dispositifs de signal.

11. Circuit selon une des revendications 1 à 10, caractérisé par le fait que les dispositifs de signal (Si1, Si2) sont des dispositifs de signal optiques ou acoustique.
